(19) **Europäisches Patentamt**

**European Patent Office**

**Office européen des brevets**

(11) **EP 4 636 526 A1**

(12) # EUROPÄISCHE PATENTANMELDUNG

(43) Veröffentlichungstag:
**22.10.2025 Patentblatt 2025/43**

(21) Anmeldenummer: **25167611.0**

(22) Anmeldetag: **01.04.2025**

(51) Internationale Patentklassifikation (IPC):
**G05D 1/245** (2024.01)   **G05D 1/246** (2024.01)
**G05D 1/242** (2024.01)   **G05D 1/646** (2024.01)
**G05D 111/50** (2024.01)

(52) Gemeinsame Patentklassifikation (CPC):
**G05D 1/646; G05D 1/242; G05D 1/245;
G05D 1/246;** G05D 2111/54

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **15.04.2024 DE 102024203427**

(71) Anmelder: **Robert Bosch GmbH
70442 Stuttgart (DE)**

(72) Erfinder:
• **Mauk, Tobias
73087 Bad Boll (DE)**
• **Specker, Thomas
71254 Ditzingen (DE)**
• **Lange, Ralph
71277 Rutesheim (DE)**

(54) **SYSTEM ZUR STEUERUNG EINES MOBILEN ROBOTERS UND VERFAHREN ZUR OPTIMIERUNG VON SYSTEMPARAMETERN DARIN**

(57)    System (1) zur Steuerung eines mobilen Roboters (2), aufweisend mindestens ein Aktor (3) zur Bewegung von Komponenten (4) des mobilen Roboters (2), mindestens zwei Sensoren (5) zum Erfassen von absoluten und relativen Bewegungsdaten von beweglichen Komponenten (4) des mobilen Roboters (2), ein Trajektorien-Berechnungsmodell (6), welches mit einem Prozessor (7) dazu eingerichtet ist, basierend auf mindestens einen Systemparameter und basierend auf einer Soll-Trajektorie mindestens einer beweglichen Komponente (4) des mobilen Roboters (2) den mindestens einen Aktor (3) zu steuern, wobei das System (1) dazu eingerichtet ist, die Systemparameter für das Trajektorien-Berechnungsmodell (6) auf Basis von Bewegungsdaten approximativ zu bestimmen, wobei Abweichungen von der tatsächlich gemessenen Trajektorie zu der auf Basis von Bewegungsdaten berechneten Trajektorie integral minimiert werden. Hierdurch werden die Nachteile des Standes der Technik überwunden.

## Fig. 3

EP 4 636 526 A1

**Beschreibung**

Die Erfindung betrifft ein System für mobile Roboter, wobei Systemparameter für ein Trajektorien-Berechnungsmodell zur Steuerung von mobilen Robotern mit Hilfe von real gemessenen Bewegungen bestimmt und optimiert werden. Die Erfindung betrifft zudem ein zugeordnetes Verfahren für eine verbesserte Ansteuerung von mobilen Robotern.

Mathematische Modelle, welche die Bewegung eines mobilen Roboters beschreiben, werden für viele Aufgaben benötigt, beispielsweise für eine Lokalisierung, Navigation, Kartenerstellung ("Mapping") und/oder Diagnose. Solche mathematischen Modelle werden auch als Trajektorien-Berechnungsmodelle bezeichnet, weil sie die Berechnung einer Bewegungsbahn und somit einer Trajektorie eines mobilen Objektes auf Basis von Systemparametern und Sensordaten erlauben. Eine gute Modellvorhersage ist essenziell für präzises Manövrieren, beispielsweise beim Docking an Ladestationen oder durch besonders enge Gänge. Zeitreihen über die Modellwerte können aber auch zur Diagnose und so genannte "Predictive Maintenance" verwendet werden, so zum Beispiel eine Reduktion des Radradius durch Abrieb, welche einen Radaustausch erfordern kann.

Trajektorien-Berechnungsmodelle enthalten typischerweise Systemparameter wie beispielsweise Radradien oder die relative Position von Sensoren im Raum bzw. zueinander, deren Zahlenwerte festgelegt werden müssen, um ein solches Modell verwenden zu können. Eine Bestimmung dieser Zahlenwerte ausschließlich aus Konstruktionsdaten ist oftmals zu ungenau und bei kleinen Stückzahlen bzw. hoher Variantenanzahl zudem aufwendig und somit kostenintensiv.

Daher wird häufig der Ansatz verfolgt, die Systemparameter automatisch und approximativ zu bestimmen. Hierzu werden Fahrmanöver mit einem mobilen Roboter oder autonomen Fahrzeug durchgeführt, während derer fortwährend Messdaten verschiedener die Bewegung des Roboters beschreibender Sensoren erfasst werden. Die Systemparameter werden dann insbesondere derart bestimmt, dass in Bezug auf zwei hintereinander erfassten Positionsdaten der Modellausgang möglichst gut zu den Messdaten passt und somit die Abweichung von realen Bewegungsdaten und berechneten Daten möglichst klein sind. Im Vordergrund steht bei einer approximativen Bestimmung der Systemparameter somit typischerweise die Verwendung einer Vielzahl von jeweils zwei in kurzem Zeitabstand hintereinander erfassten Datensätzen für die approximative Lösungsbestimmung der Systemparameter. Mittels eines Optimierungsverfahrens lässt sich dann beispielsweise der Gesamtfehler über eine Trajektorie minimieren. Da bei diesem Verfahren auf die Übereinstimmung kleiner Positionsänderungen für kurze Zeitabschnitte hin optimiert wird, wird dieses Verfahren im Folgenden als differentielle Methode bezeichnet.

Damit eine eindeutige Lösung von Bewegungsgleichungen existiert, sollen die Fahrmanöver hinreichend komplex sein, das heißt, die Fahrmanöver müssen eine hinreichende Anregung der zu schätzenden Systemparameter aufweisen und sich idealerweise hinreichend unterscheiden.

Insbesondere werden häufig kinematische Modelle betrachtet, die es erlauben, bei Vorgabe der Geschwindigkeitsinformation der Roboter-Aktoren, wie beispielsweise den Drehzahlen von Rädern als Funktion der Zeit, die räumliche Bewegung des Roboters - insbesondere gegeben durch Position und Orientierung als Funktion der Zeit - zu berechnen. Die dafür benötigten Systemparameter sind typischerweise Längen und Winkel, also geometrische Größen. Dabei entsprechen insbesondere die Raddrehzahlen den Modelleingängen und die Position sowie Orientierung den Modellausgängen. Das Trajektorien-Berechnungsmodell wird typischerweise zeitdiskret ausgeführt, also die Verläufe über der Zeit lediglich zu diskreten Zeitpunkten approximiert dargestellt.

Die vorwiegende Nutzung von jeweils zwei kurz hintereinander erfassten Datensätzen für die approximative Bestimmung der Systemparameter berücksichtigt jedoch nicht die Abweichungen von realen Daten und dem Modell für die gesamte Trajektorie in hinreichendem und möglichst exaktem Maße. So werden Abweichungen zwischen realen Bewegungsdaten und berechneten Daten durch eine Fortpflanzung von Abweichungen entlang der Trajektorie aufaddiert und führen zu weniger passenden Ergebnissen bei der Approximation der Systemparameter über Optimierungsverfahren.

Davon ausgehend ist es die Aufgabe der Erfindung, die mit Bezug auf den Stand der Technik geschilderten Problem zumindest teilweise zu lindern und insbesondere bisherige Ansätze zur Approximation der Systemparameter zu verbessern.

Diese Aufgabe wird durch den Gegenstand der unabhängigen Ansprüche gelöst. Bevorzugte Weiterbildungen finden sich in den Unteransprüchen. Die in den Ansprüchen angegebenen Merkmale können in beliebiger, technologisch sinnvoller Weise miteinander und/oder mit Merkmalen der Beschreibung kombiniert werden. Die Beschreibung, insbesondere im Zusammenhang mit den Figuren, erläutert die Erfindung und gibt weitere Ausführungsvarianten an.

Hierzu trägt ein System zur Steuerung eines mobilen Roboters bei, wobei das System zumindest folgendes umfasst:

- mindestens ein Aktor zur Bewegung von Komponenten des mobilen Roboters,
- mindestens zwei Sensoren zum Erfassen von relativen und absoluten Bewegungsdaten von beweglichen Komponenten des mobilen Roboters,
- ein Trajektorien-Berechnungsmodell, welches mit einem Prozessor dazu eingerichtet ist, basierend auf mindestens einem Systemparameter und basierend auf einer Soll-Trajektorie mindestens einer beweglichen Komponente des mobilen Roboters den mindestens einen Aktor zu steuern.

Das System ist dazu eingerichtet, die Systemparameter für das Trajektorien-Berechnungsmodell auf Basis von Bewegungsdaten approximativ zu bestimmen, wobei Abweichungen von der tatsächlich gemessenen Trajektorie zu der auf Basis von Bewegungsdaten berechneten Trajektorie integral minimiert, also insbesondere möglichst weitgehend reduziert, werden.

Der mobile Roboter kann einen einzelnen Aktor aufweisen, es sind aber auch Ausgestaltungen mit zwei oder mehr Aktoren möglich bzw. bevorzugt.

Der mobile Roboter hat insbesondere (mindestens) einen ersten Sensor zum Erfassen von relativen Bewegungsdaten mindestens einer beweglichen Komponente des mobilen Roboters sowie weiter (mindestens) einen zweiten Sensor zum Erfassen von absoluten Bewegungsdaten mindestens einer beweglichen Komponente des mobilen Roboters.

Hierdurch kann erreicht werden, dass der oder die Systemparameter für das Trajektorien-Berechnungsmodell derart bestimmt bzw. festgelegt wird bzw. werden, dass eine möglichst gute Übereinstimmung der Modellvorhersage mit der absoluten Lokalisierung über die gesamte betrachtete Bewegungstrajektorie des mobilen Roboters erzielt werden kann.

Dies kann vorrangig dadurch erreicht werden, dass bei der integrativen Methode die Fortpflanzung von Modellprädiktionsfehlern berücksichtigt wird, was bei der differentiellen Methode nicht der Fall ist. Denn bei der integrativen Methode fließen die einzelnen Teilfehler aus den verschiedenen diskreten Zeitintervallen nicht nur direkt in einen Gesamtfehler-Wert ein, sondern jeder Teilfehler wirkt sich auch auf die Teilfehler zeitlich nachfolgender Zeitintervalle aus. Typischerweise wird zur Aufsummierung der Teilfehler die Methode der minimalen Fehlerquadrate verwendet, bei der aus den verschiedenen diskreten Zeitintervallen Teilfehler (hier auch teilweise als "Einzelfehler" bezeichnet) gebildet werden und diese quadriert und anschließend aufsummiert werden, um den gesamten Fehler zu erhalten, der dann minimiert werden soll.

Auch kann bei der integrativen Methode dasselbe Integrationsverfahren, welches bei der späteren Verwendung des optimierten Modells zur Trajektorienprädiktion zum Einsatz kommt, bei der (System-) Parameterschätzung verwendet werden, sodass die Systemparameter optimal auf diese spätere Anwendung angepasst sind.

Ferner legen Experimente nahe, dass durch diese Vorgehensweise präzise Modelle schneller, d.h. insbesondere mit weniger Daten, bestimmt werden als bei der bekannten differentiellen Methode.

Bewegungsdaten können insbesondere Orts- und/oder Geschwindigkeits- und/oder Beschleunigungsparameter umfassen. Die Bezeichnung "integral minimiert" umfasst insbesondere eine Minimierung der Abweichungen, wobei Abweichungen oder Variablen in Abhängigkeit von den Abweichungen in Form einer Zielfunktion oder Kostenfunktion aufsummiert werden entlang einer gesamten erfassten Trajektorie.

Im Allgemeinen ist bei einer - üblicherweise numerischen - Optimierung stets zunächst eine Zielfunktion oder auch Kostenfunktion zu definieren, welche es zu minimieren oder maximieren gilt. Diese Zielfunktion besteht hier insbesondere in der Abweichung vom Ergebnis des theoretischen Modells - häufig auch Fehler genannt - gegenüber der realen Trajektorie.

Insbesondere ist das System dazu eingerichtet, zur Berechnung eines Einzelfehlers zeitdiskrete Bewegungsdaten von mehr als zwei unterschiedlichen Zeitpunkten einer ausgeführten Trajektorie zu verwenden. Hierdurch unterscheidet sich im Besonderen das integrative Verfahren von dem differentiellen Verfahren, wodurch das Ergebnis der Parameterbestimmung verbessert werden kann.

Beim integrativen als auch differentiellen Verfahren ist der gesamte Fehler, ausgedrückt durch eine Kostenfunktion, eine - insbesondere quadratische - Summe von Einzelfehlern. Der Einzelfehler in einem Zeitschritt k beschreibt dabei, wie schlecht Modell und Messung im Zeitraum k-1 bis k übereinstimmen. Das differentielle Verfahren unterscheidet sich vom integrativen Verfahren insbesondere dadurch, dass die Einzelfehler anders berechnet werden, denn beim differentiellen Verfahren wird das Modell für jeden kurzen Zeitabschnitt k-1 bis k getrennt ausgewertet und durch Vergleich mit der Änderung der absoluten Lokalisierungsinformation zwischen den Zeitpunkten k-1 und k ein Einzelfehler berechnet. Die Berechnungen der Einzelfehler sind unabhängig voneinander. Jeder Einzelfehler wird lediglich auf Basis von Messdaten zweier benachbarter Zeitpunkte berechnet. In den Gesamtfehler gehen aber Messdaten aus allen Zeitpunkten ein, da die Einzelfehler über die ganze Zeit aufaddiert werden. Beim integrativen Verfahren wird das Modell hingegen nur einmal ausgewertet und für den gesamten Messzeitraum in einem Schritt. Abweichungen, die im ersten Zeitraum k=0 bis k=1 entstehen, bleiben somit als Anfangsbedingung für die weitere Rechnung ab k=1 erhalten. Somit pflanzen sich Abweichungen fort.

Vorzugsweise werden die - insbesondere durch die Sensoren erfassten - Bewegungsdaten auf Positionsdaten oder Geschwindigkeitsdaten beschränkt. Hierdurch lässt sich in vorteilhafter Weise die Anzahl und/oder Komplexität der Sensoren reduzieren.

In einer besonderen Ausführungsform ist das System eingerichtet, zur Berechnung von Abweichungen zeitdiskrete Bewegungsdaten zu äquidistanten Zeitpunkten entlang der Trajektorie zu verwenden. Die äquidistanten Zeitpunkte oder auch Zeitintervalle erlauben eine einfache Umsetzung der Messungen durch die Sensoren. Auch vereinfacht sich dadurch eine spätere Berechnung, da mit einem immer gleichen Zeitintervall weitere Bewegungs- und/oder Positionsgrößen berechnet werden können.

Im Besonderen ist das System eingerichtet, die Abweichungen von mehreren tatsächlich gemessenen Trajektorien zu der auf Basis von Bewegungsdaten berechneten Trajektorien zu minimieren. Hierdurch kann eine bessere und schnellere Konvergenz der Optimierung erfolgen und/oder genauere Systemparameter bestimmt werden. Statt nur eine einzige Bewegungstrajektorie zu verwenden, können auch mehrere unabhängig voneinander durchgeführte Fahrten oder Bewegungen eines mobilen Roboters gemeinsam berücksichtigt werden, indem typischerweise die Abweichungsfunktion für alle Fahrten oder Bewegungen getrennt bestimmt wird und danach die Summe gebildet wird, um die Gesamtabweichung zu berechnen. Es kann auch vorteilhaft sein, sehr lange Bewegungstrajektorien in mehrere Teile aufzuspalten.

Insbesondere ist das System eingerichtet, die Anfangspositionsdaten der Trajektorie als freie Parameter anzunehmen. Für die modellbasiert berechneten Trajektorien ist üblicherweise wegen der notwendigen zeitlichen Integration die Wahl oder Annahme einer Anfangsbedingung notwendig, welche auch mit einer Pose bezeichnet wird. Hierzu kann eine gemessene Anfangsposition aus dem Sensor- oder Lokalisationssystem übernommen werden. Vorteilhafter kann es jedoch sein, die Anfangsposition als zusätzliche Unbekannte (neben den Parametern) aufzufassen und vom Optimierungsverfahren mitbestimmen zu lassen.

In einem weiteren Ausführungsbeispiel ist das System eingerichtet, zur Bestimmung der Systemparameter zusätzliche Variablen in dem Trajektorien-Berechnungsmodell einzusetzen, welche Abweichungen durch äußere Einflussfaktoren darstellen. Anders als bei der im Stand der Technik bekannten differentiellen Methode werden bei der vorgeschlagenen integrativen Methode Störungen, insbesondere durch kurzzeitiges Rutschen des Roboters auf glattem Untergrund oder beim Fahren über ein Kabel oder eine Schwelle) aufintegriert und können die ganze weitere Optimierung stören und zu falschen Modellparameterwerten führen. Durch die Einführung von zusätzlichen Variablen, auch Slack-Variablen genannt, wird dem Optimierungsverfahren ermöglicht, die Trajektorie an einzelnen Zeitpunkten, welche durch das Optimierungsverfahren selbst bestimmt werden, aufzubrechen und neu zu initialisieren, d.h. an diesen Stellen eine neue Anfangspose zu schätzen. Dadurch erkennt das Optimierungsverfahren (indirekt) solche Störungen und verhindert das Aufintegrieren des Fehlers.

Im Speziellen können in einer besonderen Ausführungsform - statt wie bisher nur eine einzige Bewegungstrajektorie - (auch) mehrere unabhängig voneinander durchgeführte Fahrten gemeinsam berücksichtigt werden, indem typischerweise die Kostenfunktion für alle Fahrten getrennt bestimmt wird und danach die Summe gebildet wird, um die Gesamtkosten zu berechnen. Es kann insbesondere auch vorteilhaft sein, sehr lange Bewegungstrajektorien in mehrere Teile aufzuspalten.

Gemäß einem weiteren Aspekt wird ein Verfahren zur Optimierung von Systemparametern in einem System zur Steuerung eines mobilen Roboters vorgeschlagen, aufweisend zumindest die folgenden Schritte:

- Verfahren des mindestens einen Aktors des mobilen Roboters und/oder einer Komponente des mobilen Roboters auf einer Trajektorie,
- Messen der Trajektorie des mobilen Roboters durch Erfassen von Bewegungsdaten mittels Sensoren während des Verfahrens,
- Erstellen eines Trajektorien-Berechnungsmodells,
- approximative Berechnung von einem oder mehreren Systemparametern für das Trajektorien-Berechnungsmodell durch integrale Minimierung der Abweichungen von der tatsächlich gemessenen Trajektorie zu der auf Basis von Bewegungsdaten berechneten Trajektorie.

Die Schritte können zumindest teilweise gleichzeitig bzw. parallel ausgeführt werden. Es ist möglich, dass die Schritte im Ablauf des Verfahrens unterschiedlich oft bzw. mit unterschiedlicher Wiederholrate ausgeführt werden.

Hierdurch können genauere Ergebnisse und/oder eine bessere Konvergenz der zu bestimmenden Systemparameter erreicht werden.

Im Speziellen werden beim Verfahren die Bewegungsdaten auf Positionsdaten oder Geschwindigkeitsdaten beschränkt.

Im Besonderen werden beim Verfahren zur Berechnung von Abweichungen zeitdiskrete Bewegungsdaten zu äquidistanten Zeitpunkten entlang der Trajektorie verwendet.

Vorzugsweise werden die Abweichungen von mehreren tatsächlich gemessenen Trajektorien zu der auf Basis von Bewegungsdaten berechneten Trajektorien minimiert.

Typischerweise werden die Anfangspositionsdaten der Trajektorie als freie Parameter angenommen.

Insbesondere werden zur Bestimmung der Systemparameter zusätzliche Variablen in dem Trajektorien-Berechnungsmodell eingesetzt, welche Abweichungen durch äußere Einflussfaktoren darstellen.

Die zum Betrieb oder der Ausgestaltung des Systems genannten Merkmale können auch zur Charakterisierung des Verfahrens herangezogen werden und umgekehrt. Das Verfahren kann insbesondere mit dem vorgeschlagenen System (automatisch) umgesetzt werden bzw. kann das System eingerichtet sein, das vorgeschlagene Verfahren durchzuführen. Das System kann insbesondere Mittel umfassen, die so eingerichtet sind, dass das System das vorgeschlagene Verfahren ausführen kann.

Die Erfindung sowie das technische Umfeld werden nun anhand von Figuren näher erläutert, ohne dass diese Ausführungen die Erfindung selbst beschränken. Soweit es nachfolgend nicht explizit ausgeschlossen wird, können auch in den Figuren gezeigte Teilaspekte bzw. einzelne Merkmale miteinander und/oder mit den Merkmalen der Ansprüche bzw. vorhergehenden Beschreibung kombiniert werden. Soweit Bauteile in unterschiedlichen Figuren mit gleichem Bezugszeichen versehen sind, gelten deren Beschreibungen sinngemäß für alle diese Bauteile, soweit nicht explizit etwas anderes vorgetragen ist. Die Figuren zeigen schematisch:

Fig. 1      eine Darstellung eines Systems,

Fig. 2      eine Darstellung des Verfahrens in einem Ablaufdiagramm,

Fig. 3      eine Darstellung eines beispielhaften Verlaufs einer Bewegungstrajektorie (durchgängige Linie), Referenzpositionen des absoluten Lokalisierungssystems (Rauten), Startpunkt der Bewegung (Quadrat) sowie durch das Modell berechnete Trajektorien für vier unterschiedliche Parametersätze (jeweils gestrichelt dargestellt), und

Fig. 4      eine Darstellung eines Ablaufs einer Parameterschätzung mit Hilfe eines Optimierungsverfahrens und der iterativen Auswertung der Kostenfunktion.

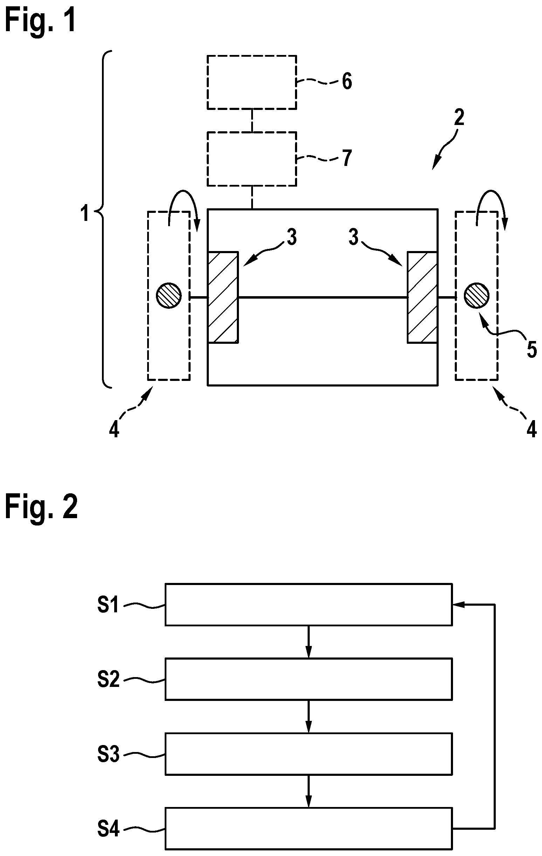

Die Fig. 1 zeigt eine Darstellung eines erfindungsgemäßen Systems 1 anhand eines Roboters in Form eines mobilen Fahrzeugs mit zwei Aktoren 3 zur Bewegung von zwei Rädern 4, zudem mit zwei Sensoren 5 zum Erfassen von Bewegungsdaten der beiden Räder 4 des mobilen Roboters 2, ein Trajektorien-Berechnungsmodell 6 und einen Prozessor 7.

Die Fig. 2 zeigt ein Ablaufschema in Bezug auf das erfindungsgemäße Verfahren mit den Schritten S1 bis S4:

S1: Verfahren von Aktoren 3 des mobilen Roboters 2 und/oder einer Komponente 4 des mobilen Roboters 2 auf einer Trajektorie,

S2: Messen der Trajektorie des mobilen Roboters 2 durch Erfassen von Bewegungsdaten mittels Sensoren 5 während des Verfahrens,

S3: Erstellen eines Trajektorien-Berechnungsmodells 6,

S4: approximative Berechnung von Systemparametern für das Trajektorien-Berechnungsmodell 6 durch integrale Minimierung der Abweichungen von der tatsächlich gemessenen Trajektorie zu der auf Basis von Bewegungsdaten berechneten Trajektorie.

Im Folgenden seien wesentliche Aspekte der Erfindung mit Hilfe eines Beispiels an einem mobilen Roboter 2 mit einer Radachse erläutert: Ein solcher mobiler Roboter 2 weist typischerweise einen sogenannten "Differential Drive" auf. Dies bezeichnet eine Antriebskonfiguration aus zwei parallel angeordneten, nicht lenkbaren, getrennt ansteuerbaren Rädern 4 auf derselben Achse. Der Modelleingang besteht bei dieser Antriebskonfiguration aus den Drehzahlen der beiden Räder 4, insbesondere als Verlauf über der Zeit. Als Modellausgang bietet sich die Position und Orientierung der Achsenmitte zwischen den beiden Rädern 4 an, ebenfalls über der Zeit. Als Parameter benötigt das Modell die beiden Radradien sowie die Spurweite (entspricht dem Abstand der Räder 4 voneinander), um bei gegebenem Modelleingang den Modellausgang berechnen zu können. Ein- und Ausgangsgrößen sind in der praktischen Umsetzung ggf. zeitdiskret ausgeführt, liegen also nur zu diskreten Zeitpunkten mit fester oder variabler Abtastzeit vor.

Für das genannte Beispiel könnte das folgende Modell verwendet werden:

$$v = (wR * rR + wL * rL) / 2 \qquad \mathrm{d}/\mathrm{d}t\, x = v * \cos(psi)$$

$$\mathrm{d}/\mathrm{d}t\, psi = (wR * rR - wL * rL) / b \qquad \mathrm{d}/\mathrm{d}t\, y = v * \sin(psi)$$

Dabei sind wL und wR die beiden Raddrehzahlen [in rad/s], rL und rR der linke bzw. rechte Radradius, b die Spurweite, v die Geschwindigkeit des Roboters 2 (an der Achsenmitte), psi die Orientierung des Roboters (z.B. der Drehwinkel gegenüber der x-Achse in einem raumfesten Koordinatensystem), d/dt psi die Drehgeschwindigkeit des Roboters 2 um die Hochachse [in rad/s], ferner entsprechen x und y den Koordinaten des Roboters 2 im raumfesten Koordinatensystem. Die Gleichungen stellen einen differentiellen Zusammenhang dar zwischen der Bewegung der Räder 4 und der Änderung von Position und Orientierung des Roboters 2 im festen Koordinatensystem. Durch zeitliche Integration können auch Position und Orientierung berechnet werden.

Für die Durchführung der automatischen Parameterschätzung ist die Erfassung von zwei Messdaten erforderlich: 1. Relative Bewegungsinformationen: Die Geschwindigkeitsinformationen der Aktoren, beispielsweise Raddrehzahlen oder Radwinkeländerungen: Diese dienen als Modelleingang und ermöglichen die Berechnung der Modellausgänge. 2. Absolute Lokalisierung: Die Pose (= Position und Orientierung) eines Bezugspunkts auf dem Roboter 2 gegenüber einem festen Koordinatensystem: Diese Lokalisierung kann beispielsweise durch Laserscanner- oder Kamera-basierte Systeme durch Abgleich mit einer Karte oder im Außenbereich durch GPS erfolgen (nur Position).

Gemäß dem Stand der Technik kann die Parameterschätzung dann folgendermaßen durchgeführt werden: Für jede Messung der absoluten Pose wird die Posenänderung seit der letzten Posenmessung bestimmt. Im Idealfall entspricht diese gemessene Posenänderung gerade derjenigen Posenänderung, die durch ein optimal parametriertes Modell durch Integration über denselben kurzen Zeitraum berechnet wird. Bei Verwendung anderer als der optimalen Parameterwerte ist eine schlechtere Übereinstimmung zu erwarten. Wird dieser Vergleich beider Posenänderungen (absolute Lokalisierung vs. Modellausgang) nun für alle durch die Messung vorliegenden Zeitschritte durchgeführt, können die sich ergebenden Fehler (typischerweise quadratisch) zu einem Gesamtfehler aufaddiert werden. Abschließend kommt nun ein beliebiges statisches Optimierungsverfahren zum Einsatz, um denjenigen Parametersatz zu finden, der diesen Gesamtfehler minimiert. Diese Vorgehensweise wird beispielsweise in [M. Di Cicco, B. Della Corte and G. Grisetti: Unsupervised calibration of wheeled mobile platforms, 2016 IEEE International Conference on Robotics and Automation (ICRA), Stockholm, Sweden, 2016, pp. 4328-4334, doi: 10.1109/ICRA.2016.7487631] beschrieben.

Da bei diesem Verfahren auf die Übereinstimmung kleiner Posenänderungen für kurze Zeitabschnitte hin optimiert wird, wird dieses Verfahren hier als differentielle Methode bezeichnet. Im Unterschied dazu wird das hier vorgestellte Verfahren als integrative Methode bezeichnet.

Das Problem wird im Folgenden am bereits eingeführten Beispiel eines mobilen Roboters 2 mit Differential Drive erklärt: Dieser weist zwei angetriebene Räder 4 auf, deren Drehzahlen (wL und wR) messtechnisch fortlaufend erfasst werden. Ferner ist er mit einem Lokalisierungssystem ausgestattet, das fortwährend die 2D-Pose (= Position x und y sowie Orientierung psi) des Roboters 2 bestimmt. Beide Informationen (Drehzahlen und 2D-Pose) können zeitdiskret erfasst sein, also typischerweise in regelmäßigen zeitlichen Abständen. Ferner wird ein Modell angenommen, das durch die bereits oben angegebenen Gleichungen beschrieben wird. Gesucht sind optimale Werte für die Parameter des Modells (Radradien rL und rR sowie Spurweite b).

Die Parameter dieses Modells sollen nun so bestimmt werden, dass das Modell in der Lage ist, die tatsächliche Bewegung des Roboters 2 (Bewegungstrajektorie im Raum) möglichst gut wiederzugeben. Als Referenz für die tatsächliche Bewegung dient der Verlauf der durch das absolute Lokalisierungssystem bestimmten Posen. Wie beim Stand der Technik soll hierzu ein Optimierungsproblem formuliert werden, welches dann durch ein geeignetes Optimierungsverfahren gelöst werden kann. Der wesentliche Unterschied zum Stand der Technik liegt in der Gestaltung des Optimalitätskriteriums. Die zu minimierende Kostenfunktion besteht bei der differentiellen Methode (SdT) aus der Summe vieler lokaler Abweichungen zwischen den durch das Modell prädizierten Posenänderungen und den durch das Lokalisierungssystem ermittelten Posenänderungen. Diese Vorgehensweise berücksichtigt nicht, dass sich ein Modellprädiktionsfehler in einem bestimmten Zeitschritt nicht nur auf eben diesen Zeitschritt auswirkt, sondern als Folgefehler auch auf alle späteren Zeitschritte.

Daher wird bei der hier vorgeschlagenen integrativen Methode ein anderer Ansatz für die Kostenfunktion gewählt. Hierbei wird für den durch das Optimierungsverfahren aktuell vorgeschlagenen Parametersatz die gesamte Bewegungstrajektorie zusammenhängend durch Anwendung des Modells berechnet, was typischerweise eine numerische Integration des Modells über die gesamte Trajektorie erfordert, daher die Bezeichnung integrative Methode. Dann wird mit der durch das absolute Lokalisierungssystem gegebenen Referenz verglichen. Als Kostenfunktion eignet sich typischerweise eine Summe quadratischer Abweichungen zwischen den Referenzposen und den jeweils zeitlich entsprechenden Posen in der durch das Modell berechneten Trajektorie.

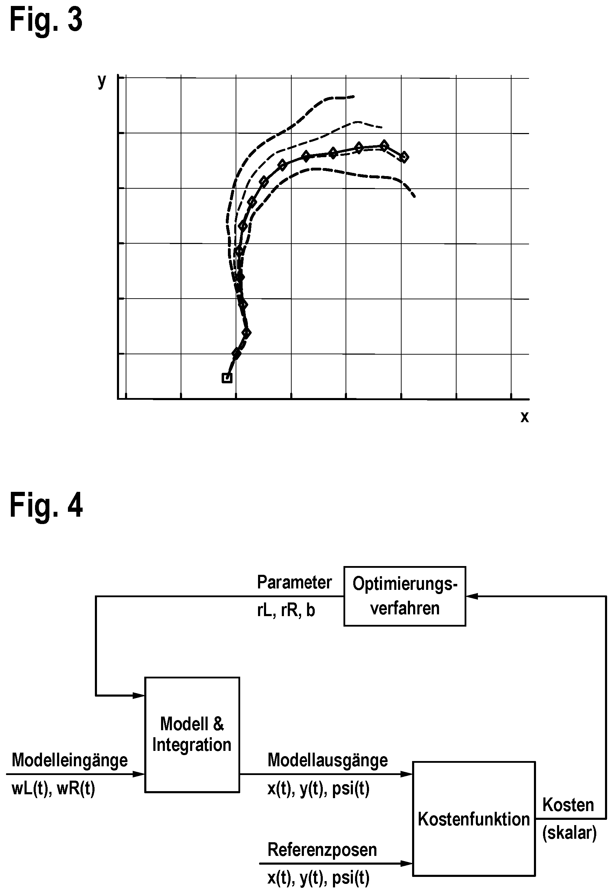

Die Fig. 3 zeigt beispielhaft eine Bewegungstrajektorie (durchgezogene Linie) des Roboters 2 in der Draufsicht (x, y), beginnend an deren Startpunkt (Quadrat), sowie die zu verschiedenen Zeitpunkten während der Fahrt durch das absolute Lokalisierungssystem ermittelten Referenzpositionen (siehe abgebildete Rauten-Punkte) entlang dieser Trajektorie. Unter Verwendung von vier voneinander verschiedenen Parametersätzen wurden jeweils Trajektorien durch das Modell berechnet (gestrichelte Linien). Es ist leicht erkennbar, dass eine dargestellte Trajektorie besser mit dem Referenzverlauf übereinstimmt als die drei anderen Trajektorien. Dieser Grad an Übereinstimmung lässt sich leicht quantitativ durch eine Kostenfunktion beschreiben, indem die Abweichungen zwischen modellbasiert berechneter Trajektorie und den Referenzpositionen bzw. - posen (typischerweise quadratisch) summiert werden. Durch ein geeignetes Optimierungsverfahren, welches diese Kostenfunktion minimiert, können somit die optimalen Parameterwerte gefunden werden.

Die Fig. 4 zeigt einen weiteren exemplarischen Ablauf einer Parameterschätzung. Für jeden vom Optimierungsverfahren vorgeschlagenen Parametersatz wird zunächst mit dem Modell und einem numerischen Integrationsverfahren der Verlauf der Modellausgänge über die Zeit berechnet. Anschließend werden diese mit den Referenzposen verglichen, die das absolute Lokalisierungssystem bereitstellt, und die Abweichung quantitativ als skalare Kosten ausgedrückt. Anhand dieser Kosten wählt das Optimierungsverfahren den nächsten Parametersatz aus, mit dem Ziel, die Kosten zu minimieren. Dieser Ablauf findet so lange statt, bis das Optimierungsverfahren abgeschlossen ist (Abbruchkriterium) bzw. optimale Parameter gefunden wurden. Die Figur 4 zeigt auch die entsprechenden konkreten Größen für den Fall des veranschaulichenden Beispiels.

**Patentansprüche**

1. System (1) zur Steuerung eines mobilen Roboters (2), aufweisend

   - mindestens ein Aktor (3) zur Bewegung von Komponenten (4) des mobilen Roboters (2),
   - mindestens zwei Sensoren (5) zum Erfassen von relativen und absoluten Bewegungsdaten von beweglichen Komponenten (4) des mobilen Roboters (2),
   - ein Trajektorien-Berechnungsmodell (6), welches mit einem Prozessor (7) dazu eingerichtet ist, basierend auf mindestens einem Systemparameter und basierend auf einer Soll-Trajektorie mindestens einer beweglichen Komponente (4) des mobilen Roboters (2) den mindestens einen Aktor (3) zu steuern,

   wobei das System (1) dazu eingerichtet ist, die Systemparameter für das Trajektorien-Berechnungsmodell (6) auf Basis von Bewegungsdaten approximativ zu bestimmen, wobei Abweichungen von der tatsächlich gemessenen Trajektorie zu der auf Basis von Bewegungsdaten berechneten Trajektorie integral minimiert werden.

2. System (1) nach Anspruch 1, wobei das System (1) eingerichtet ist, zur Berechnung eines Einzelfehlers zeitdiskrete Bewegungsdaten von mehr als zwei unterschiedlichen Zeitpunkten einer ausgeführten Trajektorie zu verwenden.

3. System (1) nach Anspruch 1 oder 2, wobei die Bewegungsdaten auf Positionsdaten oder Geschwindigkeitsdaten beschränkt werden.

4. System (1) nach einem der vorherigen Ansprüche, wobei das System (1) eingerichtet ist, zur Berechnung von Abweichungen zeitdiskrete Bewegungsdaten zu äquidistanten Zeitpunkten entlang der Trajektorie zu verwenden.

5. System (1) nach einem der vorherigen Ansprüche, wobei das System (1) eingerichtet ist, die Abweichungen von mehreren tatsächlich gemessenen Trajektorien zu der auf Basis von Bewegungsdaten berechneten Trajektorien zu minimieren.

6. System (1) nach einem der vorherigen Ansprüche, wobei das System (1) eingerichtet ist, die Anfangspositionsdaten der Trajektorie als freie Parameter anzunehmen.

7. System (1) nach einem der vorherigen Ansprüche, wobei das System (1) eingerichtet ist, zur Bestimmung der Systemparameter zusätzliche Variablen in dem Trajektorien-Berechnungsmodell (6) einzusetzen, welche Abweichungen durch äußere Einflussfaktoren darstellen.

8. Verfahren zur Optimierung von Systemparametern in einem System (1) zur Steuerung eines mobilen Roboters (2), umfassend die Schritte

   - Verfahren des mindestens einen Aktors (3) des mobilen Roboters (2) und/oder einer Komponente (4) des mobilen Roboters (2) auf einer Trajektorie,
   - Messen der Trajektorie des mobilen Roboters (2) durch Erfassen von Bewegungsdaten mittels Sensoren (5) während des Verfahrens,
   - Erstellen eines Trajektorien-Berechnungsmodells (6),
   - approximative Berechnung von einem oder mehreren Systemparametern für das Trajektorien-Berechnungsmodell (6) durch integrale Minimierung der Abweichungen von der tatsächlich gemessenen Trajektorie zu der auf Basis von Bewegungsdaten berechneten Trajektorie.

9. Verfahren nach Anspruch 8, wobei die Bewegungsdaten auf Positionsdaten oder Geschwindigkeitsdaten beschränkt werden.

10. Verfahren nach einem der Ansprüche 8 oder 9, wobei zur Berechnung von Abweichungen zeitdiskrete Bewegungsdaten zu äquidistanten Zeitpunkten entlang der Trajektorie verwenden werden.

11. Verfahren nach einem der Ansprüche 8 bis 10, wobei die Abweichungen von mehreren tatsächlich gemessenen Trajektorien zu der auf Basis von Bewegungsdaten berechneten Trajektorien minimiert werden.

12. Verfahren nach einem der Ansprüche 8 bis 11, wobei die Anfangspositionsdaten der Trajektorie als freie Parameter angenommen werden.

13. Verfahren nach einem der Ansprüche 8 bis 12, wobei zur Bestimmung der Systemparameter zusätzliche Variablen in dem Trajektorien-Berechnungsmodell (6) eingesetzt werden, welche Abweichungen durch äußere Einflussfaktoren darstellen.

# Fig. 1

# Fig. 2

# Fig. 3

# Fig. 4

Europäisches
Patentamt

European
Patent Office

Office européen
des brevets

# EUROPÄISCHER RECHERCHENBERICHT

Nummer der Anmeldung

EP 25 16 7611

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PALACÍN JORDI ET AL: "Systematic Odometry Error Evaluation and Correction in a Human-Sized Three-Wheeled Omnidirectional Mobile Robot Using Flower-Shaped Calibration Trajectories", APPLIED SCIENCES, Bd. 12, Nr. 5, 2. März 2022 (2022-03-02), XP093287144, ISSN: 2076-3417, DOI: 10.3390/app12052606 Gefunden im Internet: URL:https://www.mdpi.com/2076-3417/12/5/2606/pdf> * das ganze Dokument * ----- | 1-13 | INV. G05D1/245 G05D1/246 G05D1/242 G05D1/646 ADD. G05D111/50 |
| X | YU BIAO ET AL: "A Dead Reckoning Calibration Scheme Based on Optimization with an Adaptive Quantum-Inspired Evolutionary Algorithm for Vehicle Self-Localization", ENTROPY, Bd. 24, Nr. 8, 15. August 2022 (2022-08-15), Seite 1128, XP093236243, CH ISSN: 1099-4300, DOI: 10.3390/e24081128 Gefunden im Internet: URL:https://www.mdpi.com/1099-4300/24/8/1128> * "2. An Optimization-Based Dead Reckoning Calibration Scheme"; Seite 3 - Seite 5; Abbildungen 2,3 * ----- | 1-13 | |

RECHERCHIERTE SACHGEBIETE (IPC)

G05D

Der vorliegende Recherchenbericht wurde für alle Patentansprüche erstellt

| Recherchenort | Abschlußdatum der Recherche | Prüfer |
|---|---|---|
| München | 17. Juni 2025 | Etienne, Yves |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. DI CICCO** ; **B. DELLA CORTE** ; **G. GRISETTI**. Unsupervised calibration of wheeled mobile platforms. *2016 IEEE International Conference on Robotics and Automation (ICRA)*, 2016, 4328-4334